# EUROPÄISCHE PATENTSCHRIFT

(11) **EP 0 535 355 B1**
(45) Veröffentlichungstag und Bekanntmachung des Hinweises auf die Patenterteilung: **09.02.1994**
(21) Anmeldenummer: 92114208.9
(22) Anmeldetag: 20.08.1992
(51) Int. Cl.: B29C 65/08, A41D 27/24

(54) **Verfahren zum Verbinden mehrerer Stofflagen aus synthetischem Gewirk oder Gewebe, insbesondere Applikation von Motiven auf Flaggen, Banner, Wimpel und dergleichen, und Verwendung einer Ultraschallschweissvorrichtung sowie ein solches Gewirk oder Gewebe selbst**
Procedure to combine several layers of synthetic knitted or woven fabric, in particularly for the application of motifs on flags, banners, pennants and the like, and the use of an ultrasonic device as well as the woven or knitted fabric obtained
Procédé de liaison de plusieurs couches de tissu ou tricot synthétique, en particulier pour application de motifs sur des drapeaux bannières, flammes ou analogues; utilisation d'un dispositif à ultrasons dans ce procédé ainsi que le tissu ou tricot obtenu

(30) Priorität: 09.09.1991 DE 4129902
(43) Veröffentlichungstag der Anmeldung: 07.04.1993
(73) Patentinhaber: FahnenFleck M. Fleck & Sohn, D-25421 Pinneberg (DE)
(72) Erfinder: Fleck, Andreas, W-2000 Hamburg 20 (DE)
(74) Vertreter: Fleck, Thomas, Dr. Dipl.-Chem.

(56) Entgegenhaltungen:
- WO-A-87/04393
- DE-A- 3 342 619
- US-A- 3 893 881
- US-A- 4 149 246
- US-A- 4 976 392

## Beschreibung

Die vorliegende Erfindung betrifft ein Verfahren zum Verbinden mehrerer Stofflagen aus synthetischem Gewirk oder Gewebe nach dem Oberbegriff des Anspruches 1, sowie ein solches Gewirk oder Gewebe selbst.

Ein derartiges Verfahren ist aus der US-A-3,893,881 (= DE-A-23 01 003) bekanntgeworden. Nach dieser vorbekannten Lehre werden die Stofflagen jedoch mittels eines Bindemittels auf wenigstens einer gewünschten, einen Teil des Erzeugnisses bildenden Naht oder Verbindungslinie miteinander verbunden. Das thermoplastische Bindemittel wird also durch einen Applikator durchgehend auf den gewünschten Verbindungslinien aufgetragen. Danach wird ein Aktivierglied in Form einer aufgeheizten Kugel über die Oberfläche der aufliegenden Stofflage längs der gewünschten Verbindungslinie geführt, um das Bindemittel auf dieser Verbindungslinie zu aktivieren, und die beiden Stofflagen miteinander zu verbinden. Dieses Verfahren ist dadurch aufwendig, daß es ein besonderes Bindemittel und die Verfahrensstufe des Auftragens desselben erfordert. Häufig führt auch der Einsatz solcher synthetischer Bindungsmittel zu ungewünschten Reaktionen mit den synthetischen Stofflagen, was zu nachteiligen Farbveränderungen im Nahtbereich führt.

Nach dem Stand der Technik wird, um ein Motiv auf den Flaggengrund beidseitig aufzubringen, von der Motivvorlage eine Zeichnung 1 : 1 auf Transparentpapier erstellt. Die Konturen der Gestaltung werden "perforiert", die Pause wird auf die zusammengelegten Stoffschichten mittels Pulver gepaust und anschließend mit Spiritus auf den Stoff fixiert.

Die Konturen der Gestaltung werden von einer Näherin mit Nähmaschine durch Zickzackstich zusammengenäht. Anschließend werden die "überstehenden" Stoffteile mit einer Schere ausgeschnitten, so daß auf der Vorder- und Rückseite die Motivteile stehenbleiben und das gewünschte Motiv ergeben.

Die Vielzahl der manuellen Tätigkeiten bedingen einen hohen Arbeitsaufwand und dementsprechende Kosten. Außerdem erscheint der Einsatz von Spiritus zumindest gelegentlich gesundheits- und umweltgefährdend zu sein.

Der Erfindung liegt deshalb die Aufgabe zugrunde, das eingangs genannte Verfahren derart zu verbessern, daß es die geschilderten Nachteile sicher vermeidet, d.h. einfach und schnell durchführbar ist, so daß die Herstellungskosten für Flaggen, Banner, Wimpel und dergleichen, erheblich gesenkt werden können. Ein weiteres Ziel der Erfindung ist es, das Verfahren derart zu gestalten, daß es möglichst gesundheits- und umweltfreundlich ist. Außerdem sollte es im wesentlichen automatisch ablaufen. Darüberhinaus sollte ein neues, haltbares, mehrere Stofflagen umfassendes Gewebe oder Gewirk geschaffen werden.

Diese Aufgaben werden durch das im Anspruch 1 gekennzeichnete Verfahren bzw. das im Anspruch 11 gekennzeichnete Gewebe oder Gewirk oder auch durch die Verwendung gemäß Anspruch 12 gelöst.

Erfindungsgemäß wird also eine Ultraschallschweißung durchgeführt, bei der die Sonotrode durch digitalle Grafikdaten einer CAD-Anlage gesteuert verfahren und intermittierend zum Schweißen abgesenkt wird, wodurch die Stofflagen an diesen Punkten miteinander verschmolzen und Motive auf Flaggen, Banner, Wimpel und dergleichen appliziert werden. Hierdurch werden die aufwendigen manuellen Tätigkeiten überwiegend automatisiert, so daß eine deutliche Arbeitsersparnis resultiert. So entfallen nämlich verschiedene Handarbeiten, wie z.B. die Erstellung einer Pause auf Transparentpapier in der Größe 1 : 1 und das Zusammennadeln der Stoffschichten mit ca. 20 Nadeln pro qm. Darüberhinaus entfällt das Aufpausen und Fixieren der Konturen, sowie das manuelle Nähen nach den Konturen. In der Praxis hat sich gezeigt, daß das erfindungsgemäße Verfahren hinsichtlich der Schnelligkeit der manuellen Tätigkeiten der Näherin/Zeichnerin etwa 8fach überlegen ist. Ebenfalls führt die Gleichmäßigkeit des erfindungsgemäßen Verfahrens zu einer Qualitätssteigerung. Das so mit Motiv versehene Gewebe oder Gewirk ist auch bei extremen Wind-, Regen- und Umwelteinflüssen besonders stabil und haltbar.

Weitere Vorteile und Merkmale, die auch gemeinsam mit dem Hauptanspruch von erfindungsgemäßer Bedeutung sein können, ergeben sich aus den Unteransprüchen.

Die Erfindung wird anhand eines Ausführungsbeispieles zeichnerisch dargestellt, das jedoch die Erfindung in keiner Weise beschränken soll.

Es zeigt:
- Fig. 1: eine schematische Draufsicht der erfindungsgemäß eingesetzten Ultraschallschweißvorrichtung und die damit verbundene CNC/CAD-Anlage;
- Fig. 2: eine schematische Draufsicht des erfindungsgemäßen Gewebes bzw. Gewirks mit appliziertem Motiv und entsprechend vergrößertem Ausschnitt.
- Fig. 3: eine schematische Querschnittsansicht der Sonotrode mit Gehäuse und

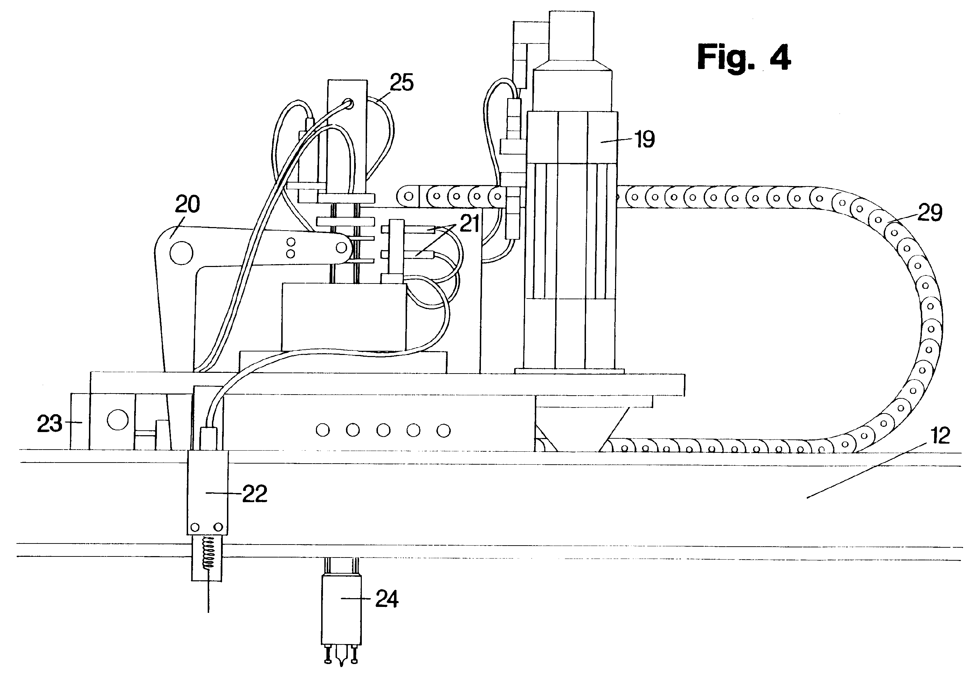

- Fig. 4: eine schematische Seitenansicht durch einen Teil der erfindungsgemäß eingesetzten Ultraschallschweißvorrichung mit Sonotrode.

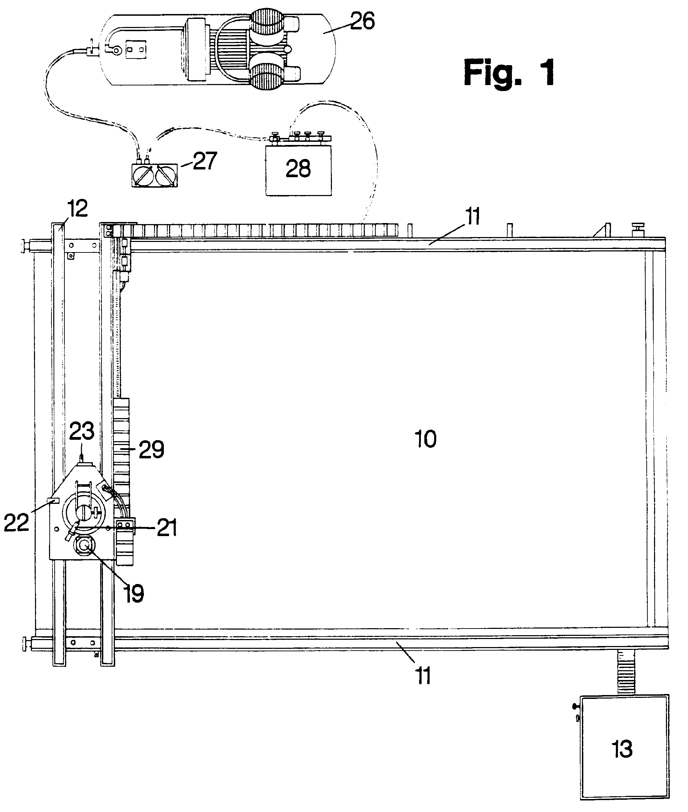

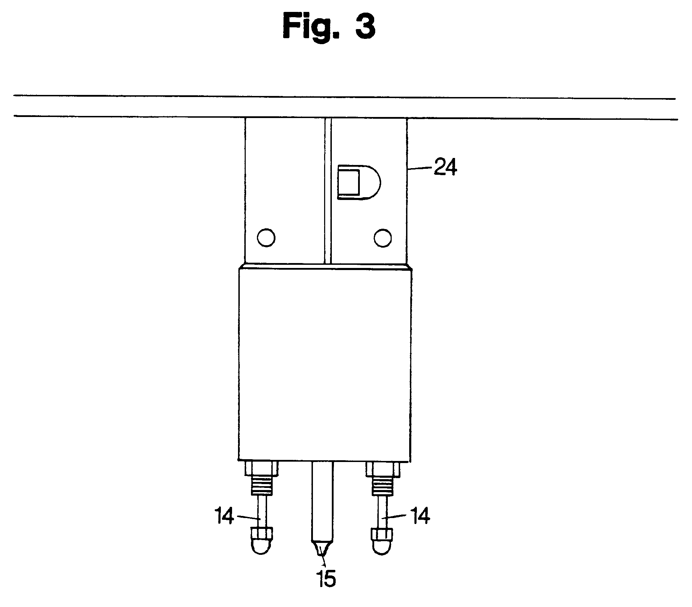

Die in Fig. 1 dargestellte Ultraschallschweißvorrichtung zur Durchführung des erfindungsgemäßen Verfahrens verfügt über eine Arbeitsplatte 10 der Ausmaße 2.000 x 3.000 mm. Andere Größen sind ebenfalls denkbar. Diese Arbeitsplatte 10 besitzt an ihren Längsseiten Führungsstangen mit Zahnprofil, die die y-Achse 11 bilden, und auf der die Stofflagen 16, 18 als Trägermaterial und daraufliegender Applikationsstoff verrutschfrei angeordnet sind. Die Sonotrode 15 (vgl. Fig. 3) ist in einem Gehäuse 24 auf zwei Querbalken befestigt, die mit ihren Enden im Zahnprofil auf der x-Achse 12 verfahrbar gelagert sind, so daß die Sonotrode 15 auf den Achsen in x- und y-Richtung verfahren werden kann. Die Steuerung erfolgt mittels das Motiv bildenden Grafikdaten. Die Steuereinheit bzw. CNC/CAD-Anlage 13 verfügt über einen Speicher von 80 MB zur lokalen Pufferung von Grafikdaten und einen Rechner mit 256 KB zur Bearbeitung dieser Grafikdaten, sowie eine Bediener-Tastatur und Motorsteuerung (nicht gezeigt). Die Sonotrode 15 wird durch eine Hubvorrichtung 20 mittels Druckluft angehoben oder abgesenkt und ist somit auch in vertikaler Richtung (z-Achse) bewegbar. Der Druck wird in einer Kompressoranlage 26 mit 200 Litern und 10 bar Leistung erzeugt. Die Drucksteuerung 23 erfolgt mittels Manometern 28. Die Druck-und Kühlungsluft wird mittels eines Lufttrockners 27 getrocknet. Ein Druckluftschlauch 25 führt zur Sonotrode 15, um diese während des Schweißvorganges zu kühlen. Luftschläuche und Elektrokabel werden in flexiblen Kanälen 29 aufgenommen. Der Notend-schalter 22 für die y-Achse verhindert ein "Herauslaufen" der Sonotrode 15 aus dem Arbeitsfeld der Arbeitsplatte 10.

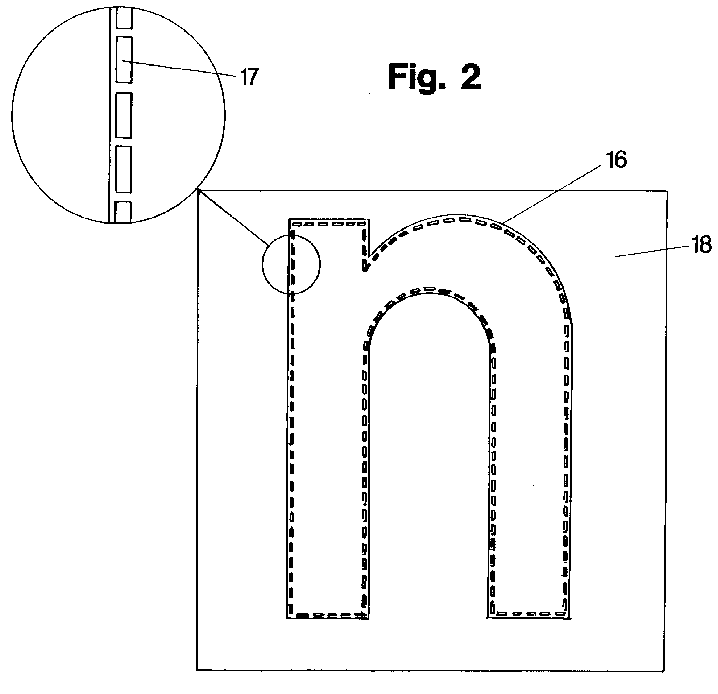

Um den rechteckigen Schweißpunkt 17 auch im Bogen führen zu können (vgl. Fig. 2), wird die Sonotrode 15 mittels Servomotor 19 gedreht. Natürlich können auch runde Schweißpunkte verwendet werden, eine Drehung der Sonotrode ist dann überflüssig. Ein Endschalter 21 überwacht diese Drehung, damit die Sonotrode 15 nicht über 180° in jede Richtung drehen kann. Um eine gleichmäßige Druckleistung und Unebenheiten in der Arbeitsplatte 10 auszugleichen, sind im Gehäuse 24 der Sonotrode 15 zwei Stoßdämpfer 14 montiert (vgl. Fig. 3).

Wie Fig. 2 deutlich zeigt, sind die stofflagen 16, 18 mittels 2,5 x 3,5 mm großer Schweißpunkt 17, die die Naht ausbilden, dauerhaft durch Verschmelzen der synthetischen Stofflagen an diesen Punkten verbunden. Im Normalfall besteht die Applikation aus drei Stofflagen: Trägermaterial, sowie vorderer und hinterer Stofflage. Auch noch weitere Stofflagen sind denkbar. Die Schweißpunkte haben einen Abstand von etwa 1 mm. Andere Größen und Abstände sind jedoch denkbar. Schließlich kann die Sonotrode 15 ausgewechselt werden, um Schweißpunkte 17 mit anderer Form und Größe zu erzeugen.

## Patentansprüche

1. Verfahren zum Verbinden mehrerer Stofflagen (16, 18) aus synthetischem Gewirk oder Geweben indem man diese auf einer Arbeitsplatte (10) übereinanderlegt und einen Applikator in gewünschter X- und Y-Richtung mittels CNC-Steuerung durch eine CAD-Anlage (13) verfährt, dadurch gekennzeichnet, daß als Applikator eine Sonotrode (15) eingesetzt wird, mit der eine Ultraschallschweißung unter Verschmelzen der synthetischen Stofflagen an den Nahtpunkten durchgeführt wird, indem sie intermittierend zum Schweißen abgesenkt wird und so Motive auf Flaggen, Banner, Wimpel und dergleichen appliziert.

2. Verfahren nach Anspruch 1, dadurch gekennzeichnet, daß die Sonotrode (15) während des Verfahrens in X- und Y-Richtung um ihre senkrechte Achse gedreht wird.

3. Verfahren nach Anspruch 2, dadurch gekennzeichnet, daß das Ausmaß der Drehung der Sonotrode (15) um ihre senkrechte Achse variabel steuerbar ist.

4. Verfahren nach Anspruch 1 bis 3, dadurch gekennzeichnet, daß die Drehung um 90° und kleiner durchgeführt wird.

5. Verfahren nach Anspruch 1 bis 3, dadurch gekennzeichnet, daß die Sonotrode (15) rechteckige Schweißpunkte (17), insbesondere von etwa 2 x 1 mm oder 2,5 x 3,5 mm, erzeugt.

6. Verfahren nach Anspruch 5, dadurch gekennzeichnet, daß der Abstand der Rechtecke voneinander etwa 0,5 - 8 mm, insbesondere 1 mm, beträgt.

7. Verfahren nach Anspruch 1 bis 6, dadurch gekennzeichnet, daß die Sonotrode (15) ausgewechselt wird.

8. Verfahren nach Anspruch 1 bis 7, dadurch gekennzeichnet, daß die Absenkung der Sonotrode (15) pneumatisch mit etwa 200 - 300 Takten/min., insbesondere 240 Takten/min. und einer Schweißzeit von 1-2/10 Sek. oder 32 Millisec arbeitet.

9. Verfahren nach Anspruch 1 bis 8, dadurch gekennzeichnet, daß der Spannrahmen (11) bezüglich seiner Größe variabel eingestellt wird.

10. Verfahren nach Anspruch 1 bis 9, dadurch gekennzeichnet, daß die Sonotrode (15) mittels Kühlluft gekühlt wird.

11. Synthetisches, aus mehreren Stofflagen (16, 18) bestehendes Gewirk oder Gewebe, dadurch gekennzeichnet, daß ein oder mehrere Motive durch Ultraschallschweißung appliziert sind, wobei die Schweißpunkte (17) eine in etwa rechteckige Form und einen Abstand von 2 - 8 mm aufweisen, und daß das bzw. die Motive hinsichtlich seiner/ihrer Kontur durch diese Schweißpunkte begrenzt ist bzw. sind, die die Naht bilden.

12. Verwendung einer Ultraschallschweißvorrichtung zur Ausführung des Verfahrens nach Anspruch 1 mit CNC-Steuerung ihrer Sonotrode (15) durch eine CAD-Anlage (13) zum Verbinden mehrerer Stofflagen (16, 18) aus synthetischem Gewebe oder Gewirk zur Applikation von Motiven auf Flaggen, Banner, Wimpel und dergleichen.

## Claims

1. Process for joining several material layers (16, 18) of synthetic knitted or woven fabric, in that the latter are superimposed on a work plate (10) and an applicator is moved in the desired x and y-directions by means of a CNC control by a CAD installation (13), characterized in that the applicator is constituted by a sonotrode 15, which carries out an ultrasonic welding fusing the synthetic material layers at the seam spots, in that it is intermittently lowered for welding purposes and in this way motifs are applied to flags, banners, pennants and the like.

2. Process according to claim 1, characterized in that during the movement in the x and y-direction, the sonotrode (15) is rotated about its vertical axis.

3. Process according to claim 2, characterized in that the extent of the rotation of the sonotrode 15 about its vertical axis is controllable in variable manner.

4. Process according to claims 1 to 3, characterized in that the rotation is by 90° and smaller.

5. Process according to claims 1 to 3, characterized in that the sonotrode (15) produces rectangular welding spots (17), particularly of approximately 2 x 1 mm or 2.5 x 3.5 mm.

6. Process according to claim 5, characterized in that the reciprocal spacing of the rectangles is approximately .5 to 8 mm, particularly 1 mm.

7. Process according to claims 1 to 6, characterized in that the sonotrode (15) can be replaced.

8. Process according to claims 1 to 7, characterized in that the lowering of the sonotrode (15) takes place pneumatically with approximately 200 to 300 and in particular 240 cycles/minute and a welding time of 1 to/10 sec. or 32 millisec.

9. Process according to claims 1 to 8, characterized in that the size of the frame (11) can be varied.

10. Process according to claims 1 to 9, characterized in that the sonotrode (15) is cooled by means of cooling air.

11. Synthetic knitted or woven fabric comprising several material layers (16, 18), characterized in that one or more motifs are applied by ultrasonic welding, the welding spots (17) having a roughly rectangular shape and a spacing of 2 to 8 mm and that the motif or motifs are limited with respect to their contour by the said welding spots, which form the seam.

12. Use of an ultrasonic welding apparatus for performing the process according to claim 1 with CNC control of its sonotrode (15) by a CAD installation (13) for joining several material layers (16, 18) formed from synthetic knitted or woven fabric for the application of motifs to flags, banners, pennants and the like.

## Revendications

1. Procédé pour relier plusieurs couches textiles (16,18) en maille ou tissu synthétique, en superposant celles-ci sur un plan de travail (10) et en déplaçant un applicateur en direction x et y souhaitée grâce à une commande numérique par station CAO (13), se qualifiant par le fait que l'applicateur est une sonotrode (15), grâce à laquelle on effectue un soudage par ultrasons en fondant ensemble des couches textiles synthétiques au point de couture, moyennant un abaissement intermittent de la sonotrode pour appliquer des motifs sur des drapeaux, des bannières, des fanions, etc...

2. Procédé d'après requête 1, se qualifiant par le fait que la sonotrode (15) tourne autour de son axe vertical lors du procédé en direction x et y.

3. Procédé d'après requête 2, se qualifiant par le fait que l'étendue de rotation de la sonotrode (15) sur son axe horizontal est en commande variable.

4. Procédé d'après requêtes 1 à 3, se qualifiant par le fait que la rotation de 90° et moins est réalisable.

5. Procédé d'après requêtes 1 à 3, se qualifiant par le fait que la sonotrode (15) génère des points de soudure rectangulaires d'environ 2 x 1mm ou 2,5 x 3,5 mm.

6. Procédé d'après requête 5, se qualifiant par le fait que la distance entre les rectangles est de 0,5 - 8 mm, en particulier 1 mm.

7. Procédé d'après requêtes 1 à 6, se qualifiant par le fait que la sonotrode est interchangeable.

8. Procédé d'après requêtes 1 à 7, se qualifiant par le fait que l'abaissement de la sonotrode est pneumatique, avec une cadence de 200 à 300/mn, en particulier 240/mn et une durée de soudage de 1-2/10 sec. ou 32 millisec..

9. Procédé d'après requêtes 1 à 8, se qualifiant par le fait que la rame (11) est réglable en taille.

10. Procédé d'après requêtes 1 à 9, se qualifiant par le fait que la sonotrode (15) est refroidie par air.

11. Le tissu ou maille synthétique, composé de plusieurs couches textiles (16,18) se qualifiant par le fait qu'un ou plusieurs motifs sont appliqués par soudage à ultrasons, et sont délimités par les points de soudure (17) rectangulaires d'une distance de 2 - 8 mm qui forment la couture.

12. Utilisation d'un dispositif de soudage par ultrasons pour réalisation du procédé d'après requête 1 avec commande numérique de la sonotrode (15) par une station CAO (13) afin de relier plusieurs couches textiles (16,18) en tissu ou maille synthétique pour l'application de motifs sur des drapeaux, bannières, fanions, etc...
